# EUROPÄISCHE PATENTANMELDUNG

(11) **EP 1 878 639 A2**
(43) Veröffentlichungstag der Anmeldung: **16.01.2008**
(21) Anmeldenummer: 07005440.8
(22) Anmeldetag: 16.03.2007
(51) Int. Cl.: B62D 5/06

(54) **Regelventil für eine Servolenkung**

(30) Priorität: 11.07.2006 DE 102006032314
(71) Anmelder: ThyssenKrupp Presta SteerTec GmbH, 40476 Düsseldorf (DE)
(72) Erfinder: Ulbricht, Thomas, Dipl.-Ing., 72144 Dußlingen (DE); Breuning, Edwin, 73770 Denkendorf (DE)
(74) Vertreter: LENZING GERBER

(57) **Zusammenfassung**

Die Erfindung betrifft ein Regelventil für eine Servolenkung, umfassend einen Eintritt (9) zur Zuführung einer Hydraulikflüssigkeit unter einem ersten Druck, einen Austritt (11) zur Abführung der Hydraulikflüssigkeit in einen Bereich mit einem kleineren, zweiten Druck, insbesondere in ein druckloses Reservoir (10), und einen entlang einer Achse (16) in einer Führung (15) beweglich aufgenommenen Ventilschieber (14), wobei der Ventilschieber (14) auf einer Seite durch die Hydraulikflüssigkeit mit dem ersten Druck beaufschlagt ist und auf der gegenüberliegenden Seite mit einer definierten Stützkraft beaufschlagt ist, wobei an zumindest einem von beiden, Ventilschieber (14) oder Führung (15), eine Öffnungsstruktur (23) vorgesehen ist und wobei an dem jeweils anderen der beiden eine zu der Öffnungsstruktur (23) korrespondierende Abdeckung 15, 24 vorgesehen ist, wobei eine Bewegung des Ventilschiebers (14) relativ zu der Führung (15) eine Veränderung einer freien, nicht von der Abdeckung verschlossenen Durchtrittsfläche der Öffnungsstruktur (23) bewirkt, wobei die Hydraulikflüssigkeit von dem Eintritt (9) durch die freie Durchtrittsfläche zu dem Austritt (11) fließen kann, wobei die Öffnungsstruktur (23) eine definierte Form aufweist, so dass die freie Durchtrittsfläche der Öffnungsstruktur (23) nicht linear von der Bewegung des Ventilschiebers (14) abhängt.

## Beschreibung

Die vorliegende Erfindung betrifft ein Regelventil für eine Servolenkung nach dem Oberbegriff des Anspruchs 1 sowie eine Servolenkung für ein Kraftfahrzeug nach dem Oberbegriff des Anspruchs 11.

DE 10 2004 044 641 A1 beschreibt eine Servolenkung für ein Kraftfahrzeug, bei der ein Drehschieberventil zur Ansteuerung eines hydraulischen Servomotors mit einer Rückwirkungsanordnung versehen ist. Die Rückwirkungsanordnung umfasst hydraulisch beaufschlagte Druckkörper, die je nach Größe des beaufschlagten Druckes eine zunehmende Steifigkeit der Lenkung bzw. einen vergrößerten Momentwiderstand des Drehschieberventils bewirken. Zur Regelung des Drucks der Rückwirkungsanordnung ist es bekannt, ein elektrisch angesteuertes Servoventil vorzusehen, das den Volumenstrom und somit den Druck auf die Rückwirkungsanordnung regelt. Zur Druckbegrenzung ist ein Regelventil parallel zu der Rückwirkungseinheit geschaltet. Bei diesem bekannten Regelventil weist ein hydraulisch beaufschlagter Ventilschieber eine in Abrollung rechteckige Öffnungsfläche auf, die ab einem durch eine Federkraft definierten Hydraulikdruck über eine korrespondierende Abdeckung einer Führung des Ventilschiebers bewegt wird. Hierdurch wird ein Durchtrittsquerschnitt für die Hydraulikflüssigkeit freigegeben, so dass die Hydraulikflüssigkeit in ein druckloses Reservoir abfließen kann. Auf diese Weise kann der Hydraulikdruck an der Rückwirkungseinheit durch das Regelventil begrenzt werden. Die Öffnung des Querschnitts zum Ablass der Hydraulikflüssigkeit erfolgt dabei sehr schnell. Der Anstieg der geometrischen freien Öffnung in Abhängigkeit von der Auslenkung des Ventilschiebers erfolgt linear. Insgesamt ist hierdurch gerade in den Bereichen relativ hoher Geschwindigkeit in denen ein relativ großer Lenkwiederstand gefordert ist, nur unzureichend einstellbar. Alternative Maßnahmen wie ein Regelkreis mit einer Druckmessung oder eine stärker differenzierte Ansteuerung des Servoventils sind kostenaufwendig und aufgrund ihrer Komplexität wenig zuverlässig.

Es ist die Aufgabe der Erfindung, ein Regelventil für eine Servolenkung anzugeben, durch das eine Verbesserung der Lenkcharakteristik in Abhängigkeit von der Fahrzeuggeschwindigkeit ermöglicht ist.

Diese Aufgabe wird für ein eingangs genanntes Regelventil erfindungsgemäß mit den kennzeichnenden Merkmalen des Anspruchs 1 gelöst. Dadurch, dass der freie Querschnitt der Öffnungsstruktur nicht linear von der Auslenkung des Ventilschiebers abhängt, ist allein aufgrund der Formgebung der Öffnungsstruktur eine gezielte Beeinflussung des an den Druckkörpern anliegenden hydraulischen Drucks über einen größeren Bereich ermöglicht. Insgesamt kann ein erfindungsgemäßes Regelventil einen größeren Einfluss in einem größeren Druckbereich auf die Lenkcharakteristik einer Servolenkung ausüben, als es durch ein druckbegrenzendes Regelventil nach dem Stand der Technik möglich ist.

In einer bevorzugten Ausführungsform weist der Ventilschieber einen hohlzylindrischen Abschnitt auf, wobei die Öffnungsstruktur als Durchbrechung in einer Wand des Abschnitts ausgebildet ist. Ein solches Regelventil ist kostengünstig und einfach herstellbar. Besonders bevorzugt weist die Führung dabei zumindest zwei zylindrische Abschnitte mit unterschiedlichen Durchmessern auf, wobei die Abdeckung als eine abgestufte Kante der Führung ausgebildet ist. Weiterhin bevorzugt weist die Abdeckung dabei eine Steuerkante auf, wobei die Steuerkante im wesentlichen senkrecht zu der Querschnittsfläche der Öffnungsstruktur ausgerichtet ist. Insgesamt ist das Regelventil auf diese Weise einfach herstellbar, wobei es zugleich eine zuverlässige Regelung und eine gute Abdichtung im vollständig geschlossenen Zustand aufweist. Alternativ kann die Steuerkante auch in einem anderen als einem rechten Winkel zu der Querschnittsfläche der Öffnung ausgerichtet sein.

Allgemein bevorzugt wird die Stützkraft eines erfindungsgemäßen Regelventils durch eine den Ventilschieber gegen die Führung abstützende Feder bewirkt. Insbesondere in Verbindung mit einer Einstellbarkeit der Federkraft ist hierdurch auf einfache Weise ein gut definierter Betriebspunkt des Regelventils gegeben.

In einer bevorzugten Detailausführung ist es vorgesehen, dass die Abdeckung die Öffnungsstruktur unterhalb eines Minimaldrucks vollständig verschließt. Alternativ kann es auch vorgesehen sein, dass auch in einem drucklosen Zustand die Öffnungsstruktur eine Restöffnung aufweist. Bevorzugt ist jedoch zu diesem Zweck in dem Ventilschieber zusätzlich zu der Öffnungsstruktur eine Konstantblende vorgesehen, wobei durch die Konstantblende eine dauerhafte Verbindung von Eintritt und Austritt vorgesehen ist. Durch eine solche Konstantblende kann eine zusätzliche Feinkorrektur des auf den Druckkörper wirkenden hydraulischen Drucks vorgesehen werden.

In weiterhin bevorzugter Ausführung steigt die freie Querschnittsfläche der Öffnungsstruktur bei zunehmender Auslenkung des Ventilschiebers aus einer Grundposition stärker als linear an. Hierdurch können gegenüber dem Stand der Technik gewünschte Korrekturen im Ansprechverhalten des Regelventils bereitgestellt werden, so dass das Regelventil zunächst nur einen leichten Druckabfall, bei zunehmendem Druck jedoch eine immer stärkere Begrenzung des Drucks durch einen zunehmend größeren Volumenstrom der abgeleiteten Hydraulikflüssigkeit vorsieht.

In einer alternativen bevorzugten Ausführungsform umfasst die Öffnungsstruktur im Interesse einer einfachen Herstellung eine Mehrzahl von in Richtung der Achse versetzt angeordneten, kreisförmigen Bohrungen. Kreisförmige Bohrungen sind mit einfachen Mitteln sehr präzise herstellbar, wobei zudem strömungsdynamische Einflüsse der Öffnungsstruktur wie etwa Turbulenzen gut berechenbar sind. Besonders bevorzugt weisen dabei zumindest zwei der versetzten Bohrungen einen unterschiedlichen Durchmesser auf, um auf einfache Weise eine deutlich nicht lineare Charakteristik der geometrischen Öffnung in Abhängigkeit der Ventilschieberauslenkung bereit zu stellen.

Die Erfindung betrifft zudem eine eingangs genannte Servolenkung für ein Kraftfahrzeug, wobei die Servolenkung erfindungsgemäß ein Regelventil nach einem der Ansprüche 1-10 umfasst. Hierdurch wird mit einfachen Mitteln eine vorteilhafte Beeinflussung der Lenkcharakteristik der Servolenkung bei verschiedenen Geschwindigkeiten ermöglicht.

Weitere Vorteile und Merkmale der Erfindung ergeben sich aus dem nachfolgend beschriebenen Ausführungsbeispiel sowie aus den abhängigen Ansprüchen.
- Fig. 1: zeigt eine schematische Darstellung der hydraulischen Komponenten einer Servolenkung mit einem Regelventil.
- Fig. 2: zeigt eine Schnittansicht eines ersten Ausführungsbeispiels eines erfindungsgemäßen Regelventils.
- Fig. 3: zeigt eine Detailvergrößerung des Ausschnitts A aus Fig. 2.
- Fig. 4: zeigt eine Schnittdarstellung eines zweiten Ausführungsbeispiels eines erfindungsgemäßen Regelventils.
- Fig. 5: zeigt ein Druck-Volumenstrom-Diagramm eines Regelventils nach dem Stand der Technik und eines erfindungsgemäßen Regelventils.
- Fig. 6: zeigt Messkurven des vom Lenkmoment abhängigen Servodrucks für eine Lenkung mit einem Regelventil nach dem Stand der Technik und für eine Lenkung mit einem erfindungsgemäßen Regelventil.

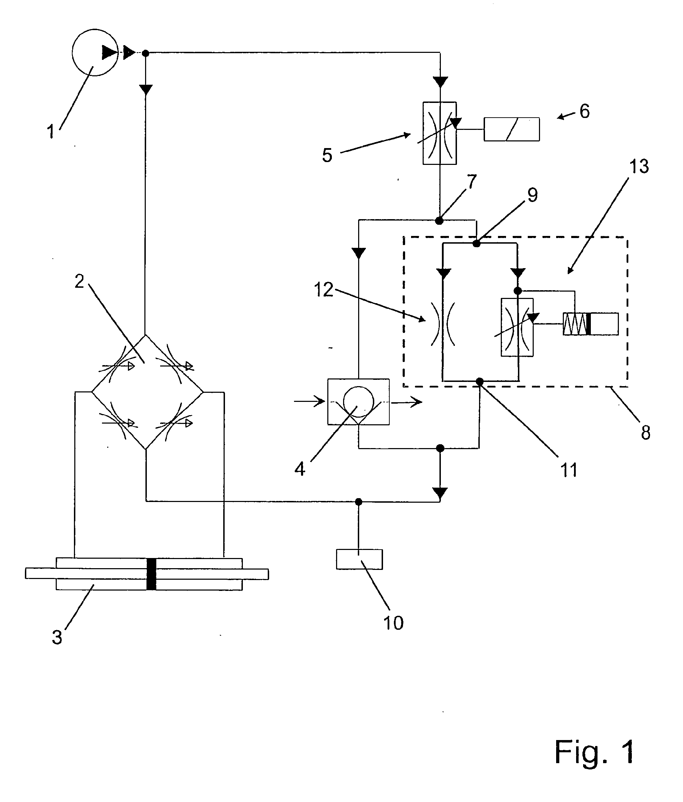

Der schematische hydraulische Schaltplan einer Servolenkung gemäß Fig. 1 ist bekannt. Mittels einer Pumpe 1 wird eine Hydraulikflüssigkeit unter Druck einem Drehschieberventil 2 zugeführt, welches über eine Lenksäule mit einem manuell betätigten Lenkrad eines Kraftfahrzeugs verbunden ist. Vorliegend hat das Drehschieberventil eine offene Mitte, wie etwa in der DE 10 2004 044 641 A1 beschrieben.

Je nach anliegendem Drehmoment zwischen Lenkrad und einem Lenkgetriebe öffnet das Drehschieberventil 2 Hydraulikleitungen zu einem hydraulischen Servomotor 3. Die Abhängigkeit dieser Öffnung bzw. der an dem Servomotor anliegenden Druckdifferenz vom Drehmoment wird vorliegend als Lenkcharakteristik der Servolenkung bezeichnet. Die vorliegende Servolenkung hat eine geschwindigkeitsabhängig veränderliche Lenkcharakteristik, wobei das Drehschieberventil 2 mit einer Rückwirkungsanordnung versehen ist. Diese Rückwirkungsanordnung umfasst Druckkörper 4, die auf geeignet ausgeformte Flächen des Drehschiebers des Drehschieberventils 2 mit je nach beaufschlagtem Druck unterschiedlicher Kraft einwirken und somit eine einstellbar veränderbare Steifigkeit der Lenkung bewirken.

Die Druckkörper 4 sind über ein Servodrosselventil 5 mit einem einstellbaren Druck beaufschlagt, wobei eingangsseitig des Servodrosselventils der volle Hydraulikdruck der Pumpe 1 anliegt.

Das Servodrosselventil 5 wird über eine Steuerelektronik 6 angesteuert, wobei das elektrische Steuersignal des Servodrosselventils im wesentlichen linear von der Fahrzeuggeschwindigkeit abhängt. Dabei ist das Drosselventil 5 bei niedriger Fahrzeuggeschwindigkeit, zum Beispiel bei einer Einparkgeschwindigkeit, vollständig geschlossen. Ab einer bestimmten Mindestgeschwindigkeit bzw. im Schnellfahrbereich ist das Servodrosselventil vollständig geöffnet. In den dazwischen liegenden Geschwindigkeitsbereichen erfolgt eine linear mit der Fahrzeuggeschwindigkeit zunehmende Öffnung des Servoventils.

Über einen zwischen Drosselventil 5 und Druckkörper 4 vorgesehenen Abzweig 7 ist ein Regelventil 8 hydraulisch verbunden, das einen Eintritt 9 und einen mit einem drucklosen Hydraulikreservoir 10 verbundenen Austritt 11 aufweist.

Zwischen Eintritt 9 und Austritt 11 des Regelventils 8 sind zwei parallele Zweige angeordnet, wobei der erste Zweig eine Konstantblende 12 aufweist und der andere einen druckabhängig veränderlichen Durchflussquerschnitt 13.

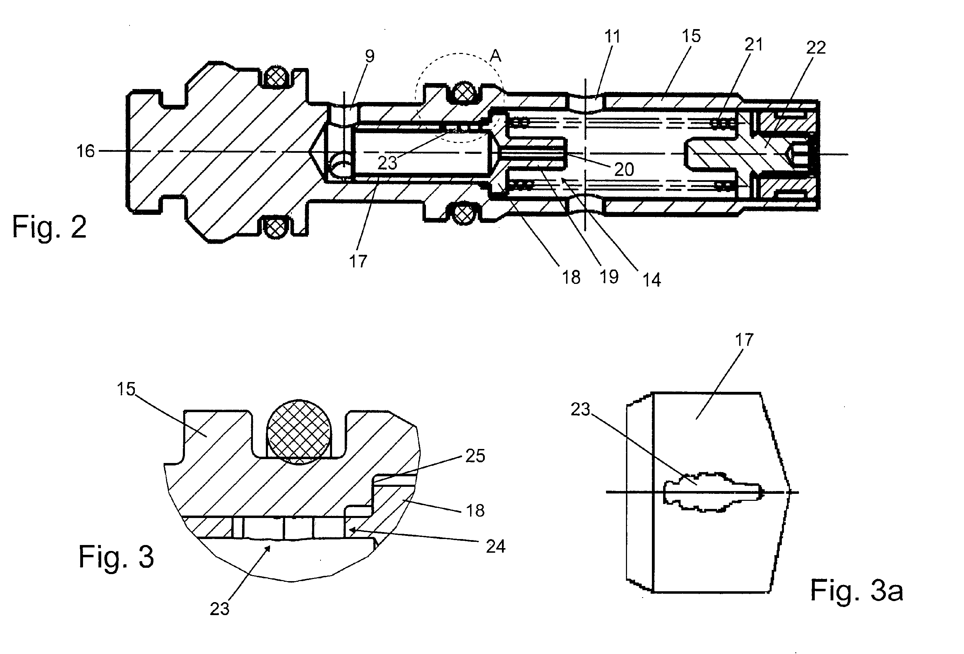

Fig. 2 zeigt eine Schnittansicht des Regelventils 8 in einer ersten Ausführungsform. Ein Ventilschieber 14 ist in einer gehäuseartigen Führung 15 entlang einer Achse 16 eindimensional verschiebbar gelagert. Der Ventilschieber 14 ist im wesentlichen als Hohlzylinder mit einer zylindrischen Wand 17 ausgebildet. Die eine Bodenseite der zylindrischen Wand 17 ist offen und mit dem Eintritt 9 der Hydraulikflüssigkeit verbunden. Der andere Bodenbereich der zylindrischen Wand 17 wird durch einen Kopfteil 18 des Ventilschiebers 14 ausgebildet, welcher einen hohlzylindrischen und zu der Achse 16 rotationssymmetrischen Fortsatz 19 umfasst. Der Fortsatz 19 weist eine zentrale durchgehende Bohrung 20 auf, die als Konstantblende 12 des Regelventils fungiert. Über die Bohrung 20 ist der Eintritt 9 mit einem in der Führung 12 jenseits des Kopfteils 18 vorgesehenen Austritt 11 dauerhaft verbunden, wobei die freie Querschnittsfläche der Bohrung 20 relativ klein ist und der Strömungswiederstand für die Hydraulikflüssigkeit aufgrund der Länge der Bohrung 20 relativ groß.

Auf der bezüglich der zylindrischen Wand 17 gegenüberliegenden Seite des Kopfteils 18 ist der Ventilschieber 14 über eine Schraubenfeder 21 gegen die Führung 15 abgestützt, wobei die Schraubenfeder 21 den im Durchmesser gegenüber der Wand 17 verjüngten Fortsatz 19 umfängt. Die Schraubenfeder 21 ist seitens der Führung 15 gegen einen Lagerbock 22 abgestützt, der über ein Gewinde einstellbar versetzbar ist, um eine Vorspannung der Feder 21 zu justieren. Grundsätzlich kann die Federkraft 21 auch über elektromotorische Stellmittel je nach Betriebszustand der Lenkung variiert werden.

In der Wand 17 ist als Durchbrechung eine Öffnungsstruktur 23 vorgesehen. Die den Ventilschieber 14 gleitend und hydraulisch dicht führende Innenwand der Führung 15 bildet eine Abdeckung für die Öffnungsstruktur 23 und endet in einer Steuerkante 24. Die Steuerkante 24 steht im wesentlichen in einem rechten Winkel zu der Durchtrittsfläche der Öffnungsstruktur 23. Eine weitere Abstufung 25 der Führung 15 bildet einen Anschlag für das Kopfteil 18, wobei im Zustand des Anschlags des Kopfteils 18 an der Abstufung 25 zugleich ein zu der Steuerkante 24 zusätzlicher Verschluss zwischen Eintritt 9 und Austritt 11 gegeben ist.

Fig. 3a zeigt eine Abrollung der Öffnungsstruktur 23 der Wand 17 des Ventilschiebers 14. Die Öffnungsstruktur 23 ist bezüglich einer zu der Bewegung des Ventilschiebers 14 parallelen Achse spiegelsymmetrisch. Die von der Steuerkante 24 überstrichene Breite der Öffnungsstruktur 23 wird in Öffnungsrichtung des Schiebers zunächst größer, um dann über einen Bereich im wesentlichen konstant zu sein und abschließend wieder kleiner zu werden, bis die maximale Öffnung durch vollständiges Verfahren der Öffnungsstruktur 23 über die Steuerkante 24 hergestellt ist.

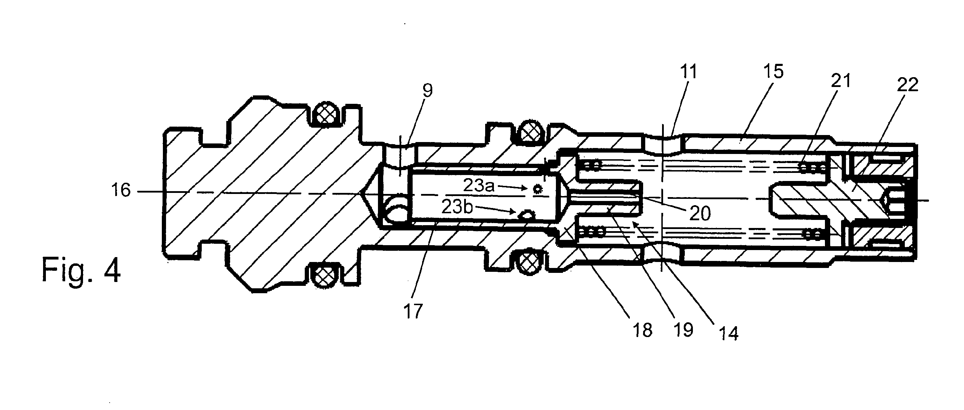

Bei der zweiten Ausführungsform gemäß Fig. 4 besteht die Öffnungsstruktur aus zwei oder mehr kreisrunden Bohrungen 23a, 23b, die in Bewegungsrichtung des Ventilschiebers 14 und in Umfangsrichtung des Ventilschiebers 14 jeweils versetzt zueinander angeordnet sind. Dabei wird der äußere Rand der zweiten, größeren Bohrung 23b von der den Ventilschieber 14 vollständig umlaufenden Steuerkante 24 bereits erreicht, bevor die erste Bohrung 23a vollständig überstrichen ist. Hinsichtlich des geometrischen freien Öffnungsquerschnitts für den Durchlass der Hydraulikflüssigkeit von dem Eintritt 9 zum Austritt 11 verhält sich das Regelventil gemäß dem zweiten Ausführungsbeispiel ähnlich wie das Regelventil nach dem ersten Ausführungsbeispiel. Die Herstellung der Öffnungsstruktur durch mehrere separate kreisrunde Bohrungen ist dabei gegenüber der komplex berandeten Öffnungsstruktur aus Fig. 3a vereinfacht.

Allgemein kann die Öffnungsstruktur eine oder mehrere Öffnungen umfassen, die jeweils kreisrund oder auch von anderer Formgebung sein können.

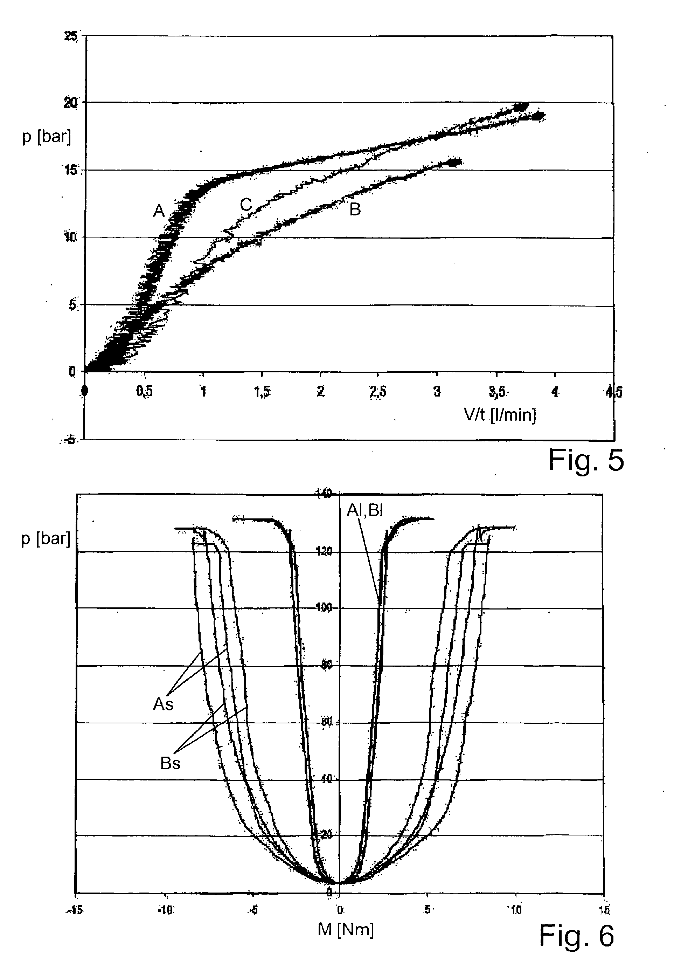

Die Wirkung der erfindungsgemäßen Weiterbildung der Regelventile aus Fig. 2 bis Fig. 4 wird dem Prinzip nach in Fig. 5 und Fig. 6 verdeutlicht.

Die Regelventilkennlinie nach dem Stand der Technik ist in Fig. 5 in der Messkurve A gezeigt. Bei ansteigendem Druck steigt die Durchflussmenge vom Eintritt 9 zum Austritt 11 des Regelschiebers gemäß dem Stand der Technik zunächst nur langsam an, wobei dieser Durchlass zunächst ausschließlich durch eine Konstantblende bewirkt ist. Etwa ab einem Druck von 13 bar weist diese Kennlinie einen scharfen Knick auf, was durch das Öffnen des Regelventils durch Bewegung des Ventilschiebers bedingt ist. Danach steigt die Durchflussmenge gegenüber der weiteren Druckerhöhung sehr steil an, so dass eine recht scharfe Limitierung des auf die Druckkörper wirkenden hydraulischen Drucks vorliegt.

Die beiden anderen Messkurven B und C zeigen das Verhalten eines erfindungsgemäßen Regelventils bei nicht linearem Anstieg des freien Öffnungsquerschnitts. Der unterschiedliche Verlauf der Messkurven B, C geht auf unterschiedliche Vorspannungen der Feder 21 des gleichen Regelventils zurück.

Erkennbar weisen die Messkurven B, C des erfindungsgemäßen Regelventils einen erheblich gleichmäßigeren Verlauf auf, wobei tendenziell bei geringeren Drücken eine höhere Durchflussmenge als im Fall des Standes der Technik erzielt wird und wobei bei höheren Drücken zumindest im Fall der Messkurve C in Druckbereichen oberhalb von etwa 17 bar größere Durchflussmengen als beim Stand der Technik erreicht werden.

Die resultierende Lenkcharakteristik bei Verwendung eines erfindungsgemäßen Regelventils in einer Servolenkung nach Fig. 1 wird in Fig. 6 mit dem Stand der Technik verglichen. Aufgetragen ist die an dem Servomotor 3 anliegende Druckdifferenz der Hydraulikflüssigkeit gegenüber dem an dem Lenkrad anliegenden Drehmoment. Bei den eingezeichneten Kurven handelt es sich um echte Messkurven, welche eine Art Hysterese aufweisen (doppelte Zweige der gleichen Messung für Hin- und Rückdrehen des Lenkrads). Diese ist ein Resultat der Reibungen in den Ventilen und Leitungen, wodurch sich je nach Drehrichtung der Lenkung unterschiedliche Druckverläufe in Abhängigkeit von dem Drehmoment ergeben. Eingezeichnet sind jeweils eine Langsamfahrkennlinie nach dem Stand der Technik AL und mit erfindungsgemäßen Regelventil BL sowie eine Schnellfahrkennlinie nach dem Stand der Technik AS und eine Schnellfahrkennlinie mit dem erfindungsgemäßen Regelventil BS. Die Langsamfahrlinien AL, BL fallen im Rahmen der Messgenauigkeit identisch zusammen. Dies ist zu erwarten, da hier das Drosselventil vollständig geschlossen ist und an dem Regelventil und an den Druckkörpern 4 kein Druck anliegt. Bei der jeweiligen Schnellfahrkennlinie nach dem Stand der Technik AS und mit erfindungsgemäßem Regelventil BS zeigt sich dagegen der Einfluss des erfindungsgemäßen Regelventils, wobei das Servoventil und seine Ansteuerung jeweils identisch sind. Die Kennlinie BS verläuft insbesondere im Bereich größerer Drehmomente steiler als die Kennlinie As, so dass die Lenkkraftunterstützung etwas größer ist als im Fall des Standes der Technik. Es versteht sich, dass je nach Auslegung der Vorspannkraft der Feder und der Geometrie der Öffnungsstruktur 23 auch andere Veränderungen der Lenkcharakteristik vorgenommen werden können.

Hierdurch ist auf einfache und zuverlässige, rein mechanische Weise eine Einstellung der Lenkcharakteristik erzielt worden, ohne das z. B. die Ansteuerung des Drosselventils geändert werden muss.

## Patentansprüche

1. Regelventil für eine Servolenkung, umfassend
einen Eintritt (9) zur Zuführung einer Hydraulikflüssigkeit unter einem ersten Druck,
einen Austritt (11) zur Abführung der Hydraulikflüssigkeit in einen Bereich mit einem kleineren, zweiten Druck, insbesondere in ein druckloses Reservoir (10), und
einen entlang einer Achse (16) in einer Führung (15) beweglich aufgenommenen Ventilschieber (14), wobei der Ventilschieber (14) auf einer Seite durch die Hydraulikflüssigkeit mit dem ersten Druck beaufschlagt ist und auf der gegenüberliegenden Seite mit einer definierten Stützkraft beaufschlagt ist,
wobei an zumindest einem von beiden, Ventilschieber (14) oder Führung (15), eine Öffnungsstruktur (23) vorgesehen ist und wobei an dem jeweils anderen der beiden eine zu der Öffnungsstruktur (23) korrespondierende Abdeckung 15, 24 vorgesehen ist,
wobei eine Bewegung des Ventilschiebers (14) relativ zu der Führung (15) eine Veränderung einer freien, nicht von der Abdeckung verschlossenen Durchtrittsfläche der Öffnungsstruktur (23) bewirkt, wobei die Hydraulikflüssigkeit von dem Eintritt (9) durch die freie Durchtrittsfläche zu dem Austritt (11) fließen kann,
**dadurch gekennzeichnet,**
**dass** die Öffnungsstruktur (23) eine definierte Form aufweist, so dass die freie Durchtrittsfläche der Öffnungstruktur (23) nicht linear von der Bewegung des Ventilschiebers (14) abhängt.

2. Regelventil nach Anspruch 1, **dadurch gekennzeichnet, dass** der Ventilschieber (14) einen hohlzylindrischen Abschnitt (17) aufweist, wobei die Öffnungsstruktur (23) als zumindest eine Durchbrechung in einer Wand des Abschnitts (17) ausgebildet ist.

3. Regelventil nach Anspruch 2, **dadurch gekennzeichnet, dass** die Führung (15) zumindest zwei zylindrische Abschnitte mit unterschiedlichen Durchmessern aufweist, wobei die Abdeckung eine abgestufte Kante (24) der Führung (15) umfasst.

4. Regelventil nach einem der vorhergehenden Ansprüche, **dadurch gekennzeichnet, dass** die Stützkraft durch eine den Ventilschieber (14) gegen die Führung (15) abstützende Feder (21) bewirkt wird.

5. Regelventil nach einem der vorhergehenden Ansprüche, **dadurch gekennzeichnet, dass** die Abdeckung (15, 24) die Öffnungsstruktur (23) unterhalb eines definierten Minimaldrucks vollständig verschließt.

6. Regelventil nach einem der vorhergehenden Ansprüche, **dadurch gekennzeichnet, dass** in dem Ventilschieber (14) zusätzlich zu der Öffnungsstruktur (23) eine Konstantblende (20) vorgesehen ist, wobei durch die Konstantblende (20) eine dauerhafte Verbindung von Eintritt (9) und Austritt (11) vorgesehen ist.

7. Regelventil nach einem der vorhergehenden Ansprüche, **dadurch gekennzeichnet, dass** die freie Durchtrittsfläche der Öffnungsstruktur (23) bei zunehmender Auslenkung des Ventilschiebers (14) aus einer Grundposition stärker als linear ansteigt.

8. Regelventil nach einem der vorhergehenden Ansprüche, **dadurch gekennzeichnet, dass** die Öffnungsstruktur eine Mehrzahl von in Richtung der Achse (16) versetzt angeordneter, kreisförmiger Bohrungen (23a, 23b) umfasst.

9. Regelventil nach Anspruch 8, **dadurch gekennzeichnet, dass** zumindest zwei der versetzten Bohrungen (23a, 23b) einen unterschiedlichen Durchmesser aufweisen.

10. Regelventil nach einem der vorhergehenden Ansprüche, **dadurch gekennzeichnet, dass** die Abdeckung eine Steuerkante (24) aufweist, wobei die Steuerkante (24) im wesentlichen senkrecht zu der Durchtrittfläche der Öffnungsstruktur (23) ausgerichtet ist.

11. Servolenkung für ein Kraftfahrzeug, umfassend
ein Drehschieberventil (2) zur drehmomentabhängigen Ansteuerung eines hydraulischen Stellmotors (3),
eine Rückwirkungseinrichtung mit zumindest einem Druckkörper (4), wobei durch einen auf den Druckkörper ausgeübten Steuerdruck eine Drehmomentabhängigkeit des Drehschieberventils einstellbar veränderbar ist,
ein Servoventil (5) zur zumindest teilweisen Einstellung des Steuerdrucks in Abhängigkeit von einer Geschwindigkeit des Kraftfahrzeugs, und
Mittel zur Begrenzung eines maximalen Steuerdrucks,
**dadurch gekennzeichnet,**
**dass** die Mittel zur Begrenzung des Steuerdrucks ein Regelventil (8) nach einem der Ansprüche 1 bis 10 umfassen.
